# EUROPEAN PATENT APPLICATION

(11) **EP 2 460 654 A1**
(43) Date of publication of application: **06.06.2012**
(21) Application number: 11191689.6
(22) Date of filing: 02.12.2011
(51) Int. Cl.: B32B 7/02, B32B 27/36

(54) **Waterproof member and method of producing the same**

(30) Priority: 03.12.2010 KR 20100122458
(71) Applicant: Pantech Co., Ltd., Seoul 121-792 (KR)
(72) Inventor: Yang, Chang Jin, Seoul 121-792 (KR)
(74) Representative: Herzog, Markus

(57) **Abstract**

A waterproof member includes a polymer sheet and a UV resin layer adhered to the polymer sheet. A method of producing a waterproof member includes injecting a first UV resin solution into a first resin molding, placing a polymer sheet onto the first UV resin solution, compressing the polymer sheet and the first UV resin solution to be closely adhered to each other, curing a first UV resin layer on the polymer sheet by irradiating UV into the first UV resin solution, injecting a second UV resin solution into a second resin molding, placing a polymer sheet having the first UV resin molding onto the second resin molding, compressing the polymer sheet and the second UV resin solution to be closely adhered to each other, and curing a second UV resin layer on the polymer sheet by irradiating UV into the second UV resin solution.

## Description

### CROSS-REFERENCE TO RELATED APPLICATION

This application claims priority from and the benefit under 35 U.S.C. §119(a) of Korean Patent Application No. 10-2010-0122458, filed on December 3, 2010, which is incorporated by reference for all purposes as if fully set forth herein.

### BACKGROUND

FIELD

The present invention relates to a waterproof member and a method of producing the same. More particularly, to a waterproof member and a method of producing the member for protecting internal components of a mobile terminal from moisture damage.

DISCUSSION OF THE BACKGROUND

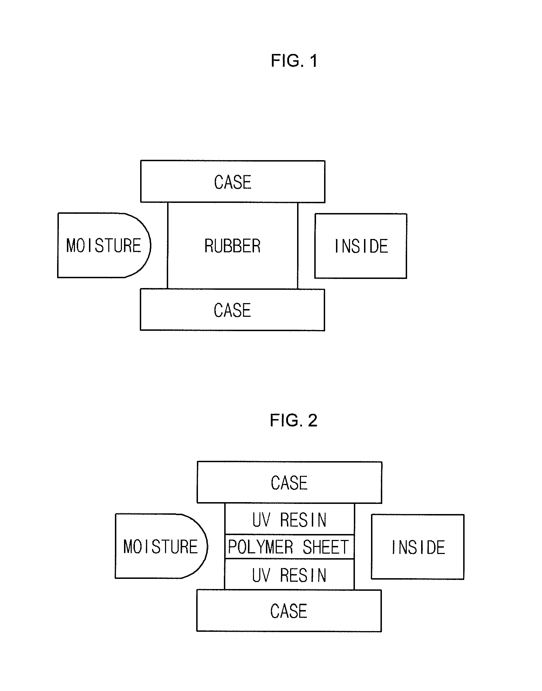

In general, electronic products, particularly mobile terminals, can be freely used regardless of location while a user moves. Owing to convenience in use, use of mobile communication terminals, such as mobile phones and personal digital assistants (PDAs) that are referred to as personal portable terminals, is gradually growing. However, since the mobile terminals are normally used while users are on the move, there may be an increased risk of being exposed to water or moisture. For example, mobile terminals may be at risk of being dropped into a pool of water, or getting wet by unexpected rain or spilled beverage. Electronic products, which are vulnerable to moisture, may be provided with a mechanism having waterproofing capacity. Accordingly, a variety of waterproof members have been developed. However, in existing waterproof members, as shown in FIG. 1, a gap between assembled products, that is, a gap between upper and lower cases in a cellular phone, is conventionally sealed with rubber or silicon.

In such a case, however, the conventional rubber or silicon may have difficulty in maintaining its shape (regularity), and as a result, it may be difficult to perform assembling work with the conventional rubber or silicon. Accordingly, the assembling of the conventional waterproof members may result in poor operation efficiency. In addition, rubber or silicon may be lengthened due to its ductility, which may result in inconsistent shape. Accordingly, the waterproof capacity may gradually decrease for these reasons with a prolonged use.

### SUMMARY

Exemplary embodiments of the present invention provide a water proofing member and a method for producing the same.

Additional features of the invention will be set forth in the description which follows, and in part will be apparent from the description, or may be learned by practice of the invention.

Exemplary embodiments of the present invention provide a polymer sheet, and an ultraviolet (UV) resin layer adhered to a first surface and a second surface of the polymer sheet.

Exemplary embodiments of the present invention provide a method for producing a waterproof member that including injecting a first ultraviolet (UV) resin solution into a first resin molding; placing a polymer sheet onto the first UV resin solution; compressing the polymer sheet and the first UV resin solution to be adhered to each other; and curing a first UV resin layer on the polymer sheet by irradiating UV into the first UV resin solution.

Exemplary embodiments of the present invention provide a member to prevent liquid from entering into an area including a first material formed by ultraviolet (UV) irradiation; a second material; and a third material formed by UV irradiation, in which the first material and the third material sandwich the second material.

Exemplary embodiments of the present invention provide a terminal including a waterproof member to block liquid from entry, in which the waterproof member includes a polymer sheet, and an ultraviolet (UV) resin layer adhered to a first surface and a second surface of the polymer sheet.

It is to be understood that both foregoing general descriptions and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a schematic cross-sectional view of a conventional waterproof member.

FIG. 2 is a cross-sectional view of a waterproof member according to an exemplary embodiment of the invention.

FIG. 3 is a front view of the waterproof member shown in FIG. 2 according to an exemplary embodiment of the invention.

FIG. 4 is a flow chart illustrating a method of producing a waterproof member according to an exemplary embodiment of the invention.

FIG. 5 is a flow chart illustrating a method of producing a waterproof member according to an exemplary embodiment of the invention.

### DETAILED DESCRIPTION OF THE ILLUSTRATED EMBODIMENTS

The invention is described more fully hereinafter with references to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. It will be understood that when an element is referred to as being "adhered to" or "attached to" another element, it can be directly adhered or attached to the other element, or intervening elements may be present. Throughout the drawings and the detailed description, unless otherwise described, the same drawing reference numerals are understood to refer to the same elements, features, and structures. The relative size and depiction of these elements may be exaggerated for clarity, illustration, and convenience.

FIG. 1 is a schematic cross-sectional view of a conventional waterproof member. As shown in FIG. 1, the conventional waterproof member includes a rubber or silicone to act as a seal against moisture.

Hereinafter, embodiments of the present invention will be described in detail with reference to the accompanying drawings.

FIG. 2 is a cross-sectional view of a waterproof member according to an exemplary embodiment of the invention.

As shown in FIG. 2, the waterproof member includes one or more layers of ultraviolet (UV) resin and a polymer sheet to provide protection against moisture. More specifically, the waterproof member includes a polymer sheet capable of maintaining regularity and materials having a compressive and restoring forces sandwiched on top and bottom of the polymer sheet. In addition, one or more layers of soft UV resin, which may exhibit compressive and restoring force, are provided on both sides of the polymer sheet.

While the waterproof member according to the exemplary embodiment of the invention includes a polymer sheet and soft UV resin layers assembled on top and bottom of the polymer sheet, the invention is not limited to such configuration or the number of resin layers and polymer sheets.

In an example, the polymer sheet capable of maintaining regularity may be used in the water proof member. More specifically, a polymer sheet having high adhesiveness with respect to soft UV resin may be preferably used. For example, a PC (Polycarbonate) or PET (Polyethylene Terephthalate) sheet may be used as the polymer sheet, but not limited thereto.

Further, a thickness of the polymer sheet may preferably be in a range of 150 to 300 µm. If the polymer sheet is too thin, it may be difficult to maintain regularity thereof. If the polymer sheet is too thick, the compressive strength thereof may be lowered, and may lower waterproofing efficiency.

The soft UV resin used may be a resin that is commercially available or synthesized. In an example, the soft resins with a thickness of 300 µm to 500 µm may provide acceptable comprehensive strength. In addition to the raw material thereof, a curing agent may be added. In addition, the soft UV resin may be produced to further include functional additives, such as an anti-foaming agent, an extinction agent, or the like.

A thickness of the soft UV resin layer is preferably in a range of 300 µm to 500 µm. If the UV resin layer is too thin, the compressive strength thereof may be lowered, thereby undesirably lowering waterproof efficiency. If the soft UV resin layer is too thick, the regularity thereof may deteriorate.

A resin generally classified as a soft in view of the relative softness of UV resin may be used as the soft UV resin in the waterproof member. For example, a resin layer resulting from curing preferably has Shore hardness in a range of 40° to 60°. If the waterproof member has an excessively high hardness, deformation may occur in the course of producing the waterproof member. In addition, if an external force is applied, cracks may be generated and compression may not be performed properly. If the waterproof member has an excessively low hardness, the waterproof member may be lengthened or may have poor restoration capacity after a prolonged use, thus causing the waterproof member to be deformed due to an external force applied thereto.

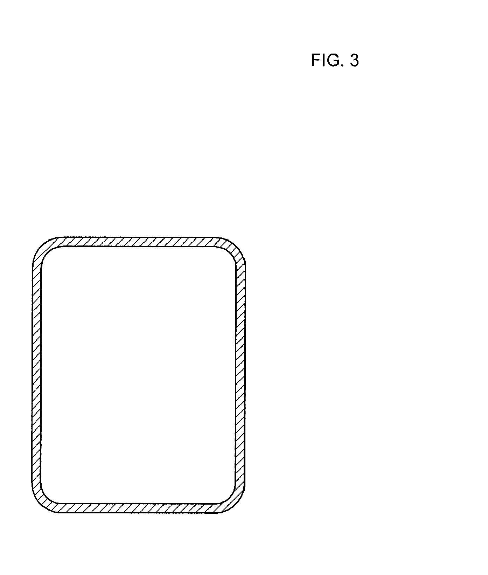

The waterproof member according to the present invention can be applied to assembled machines and electronic devices. For example, the waterproof member according to the present invention can be applied to a variety of devices that may benefit from waterproofing capabilities. Such devices may find difficulty in providing waterproofing due to a gap between assembled components, like a mobile communication terminals, such as PMP, PDA, cellular phones, and the like. The waterproof member sealing a gap created between upper and lower cases of a cellular phone as provided by the presently disclosed waterproof member may be shaped as connected rings, for example, as shown in FIG. 3. More specifically, FIG. 3 provides a front view of the waterproof member shown in FIG. 2 according to an exemplary embodiment of the invention.

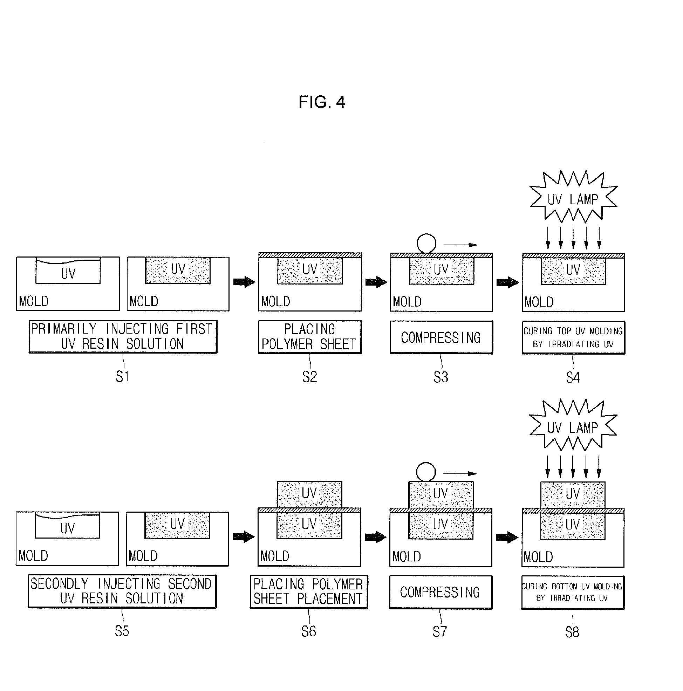

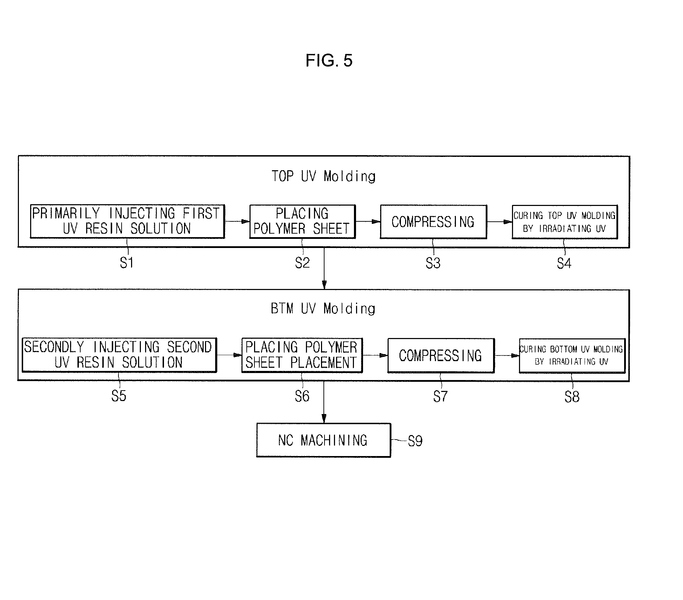

FIG. 4 and FIG. 5 provide flow charts illustrating a method of producing a waterproof member according to an exemplary embodiment of the invention. Referring to FIG. 4 and FIG. 5, a method of producing a waterproof member includes steps of (S1) injecting a first UV resin solution into a first mold, (S2) placing a polymer sheet onto the first UV resin solution, (S3) compressing the polymer sheet and the first UV resin solution to be closely adhered to each other, (S4) curing the first UV resin layer on the polymer sheet by irradiating UV into the first UV resin solution, (S5) injecting a second UV resin solution into a second mold, (S6) placing a polymer sheet having the first UV resin layer onto the second UV resin solution, (S7) compressing the polymer sheet and the second UV resin solution to be closely adhered to each other, and (S8) curing the second UV resin molding on the polymer sheet by irradiating UV into the second UV resin solution.

In an example, the step (S1) and step (S5) may be performed simultaneously or sequentially. Also, in the step (S1) and step (S5), the first mold and the second mold may be shaped according to the shape of the device to which the waterproof member is to be applied, but not limited thereto. Alternatively, the waterproof member may be fabricated in a flat sheet-like shape and then cut and machined into a desired shape. In this manner, the fabrication cost of molds and raw material costs may be saved and the production process may be simplified. In addition, the waterproof member can be produced by modifying existing manufacturing equipment.

The first UV resin solution and the second UV resin solution may be the same or different from each other.

For example, if the top and bottom resin layers are designed to have different restoring and compressive forces, different UV resin solutions may be used, or UV resin solution layers having different thicknesses may be used according to its desired use.

In step (S2), the polymer sheet is placed to cover the UV resin solution.

In step (S3), the compressive force and direction and the size of roller are determined according to the size and thickness of the waterproof member and detailed descriptions thereabout will not be given because they may be adjustably selected by one skilled in the art.

In step (S4), curing of UV resin can be appropriately selected and modified according to the UV resin solution used. For example, the curing may be performed by irradiating a UV lamp of 700J to 1000J for 5 to 10 seconds.

In step (S6), a polymer sheet having the first UV resin molding is placed such that top and second moldings of the polymer sheet are symmetrical with each other.

In step (S7), the polymer sheet and the second UV resin solution are compressed to be adhered to each other. In a case where compressing of the first UV resin layer may be difficult to achieve due to presence of a three-dimensional structure, the first UV resin layer may be shaped by machining by shaping the flatly-shaped waterproof member, followed by cutting and machining.

In step (S8), the second UV resin layer is cured in the same condition as described in step (S4).

In the illustrated embodiment of the present invention, the method of producing a waterproof member may further include the step (S9) of cutting and machining the waterproof member. That is to say, a flatly-shaped waterproof member may be produced in the desired shape without separately producing a mold according to the device using a waterproof member to then be subjected to machining through cutting and machining steps, thereby producing a waterproof member having a desired shape. The waterproof member having a desired shape can be produced simply by changing the program through, for example, NC (Numerical Control) machining, thereby easily producing the waterproof member having a more complex, smaller shape.

Hereinafter, the present invention will be described in more detail through several embodiments. The following examples are given for purely illustrative and non-limiting purposes of the present invention.

Example 1

A 140x60 mm shape was machined in a 220x200 mm mold to a depth of 0.5 mm in consideration of an NC machining width for a 125x47 shape and a UV resin solution (2004e commercially available from Mirae C&P, Korea) is injected into the mold. A 300 µm thick PC Sheet was placed to cover the UV resin solution and then compressed back and forth with a pressure of 2 kgf/cm² using a 250mm roller. A UV lamp of 900 J was irradiated onto the sheet for 10 seconds for curing, producing a top UV resin layer. The cured top UV resin layer was removed from the mold, followed by a second injection of the UV resin solution into the mold. The PC sheet having the UV resin layer was placed on the second UV resin solution then compressed, and the UV lamp was further irradiated for 10 seconds for curing, producing a bottom UV resin layer, thereby assembling a waterproof member having a sandwiched structure.

The produced waterproof member was NC machined to seal a gap created between upper and lower cases of a cellular phone, thereby producing a ring-shaped waterproof member.

Experimental Example 1

Evaluation criteria of the waterproof member produced according to Example 1, including the moldability, production period, production cost, correcting convenience and correction cost of a mold, the work efficiency, and so on, are compared with those of the conventional waterproof ring (SILICON 40°, RUBBER PACK CASE, NOK Corporation), and the comparison results are summarized in Table 1.

**Table 1**

| | Conventional waterproof ring | Waterproof member of Example 1 |
|---|---|---|
| Moldability | Precision mold, not available in Korea | Moldable in approximately 1 week |
| Mold production period | Approximately 7 weeks | Approximately 1 week |
| Mold production cost | Approximately 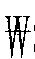 80,000,000 (in Korean currency) | Approximately 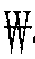 4,000,000 (in Korean currency) |
| Mold correcting convenience | Approximately 30 days | Approximately 3 days |
| Mold correction cost | Approximately 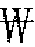 3,000,000 (in Korean currency) | Approximately 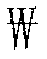 1,000,000 (in Korean currency) |
| Operation efficiency | Approximately 3 min for assembling | Approximately 10 sec for assembling |
| Production time required per piece | Approximately 4 min/1piece | Approximately 10 sec/1piece |
| Raw material cost | Approximately 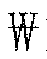 1,200 (in Korean currency) | Approximately 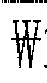 300 (in Korean currency) |

Experimental Example 2

Cellular phones (PT001) employing the conventional waterproof ring and the waterproof member of Example 1 were submerged into a 1 m deep water basin for 30 minutes and taken out from the water basin. Then, the cellular phones were disassembled to confirm whether a paper indicator reacting to moisture or water was discolored or not. In an example, the paper indicator is a paper which changes color if it is exposed to moisture. The result of this experiment is summarized in Table 2.

As understood from Table 2, the waterproof member of Example 1 and the conventional waterproof ring were equal in view of the waterproofing level.

**Table 2**

| Type | Conventional waterproof ring (SILICONE 40°) | Waterproof member of Example 1 | Medium (2000 series) | Hard (3000 series) |
|---|---|---|---|---|
| Air leak tester | Displacement of 4 µm | Displacement of 7 µm | Displacement of 30 µm | Fail |
| IPX 7 grade TEST | Submerged sheet was not discolored | Submerged sheet was not discolored | Submerged sheet was discolored | Submerged sheet was discolored |

* Remark:
1) Successful waterproofing levels of PT001 as measured using an air leak tester were 10 µm or less.
2) IPX 7 grade test: It was confirmed whether cellular phones submerged to a depth of 1 m for 30 minutes (confirmed as 'OK' or 'Fail' by checking discoloration of the paper indicator).
(The air leak tester used determines sealing efficiency by measuring displacement of a case using a pneumatic pressure applied to a sealed container to then evaluate waterproofing performance.)

As understood from Table 2, the waterproof member of Example 1 and the conventional waterproof ring demonstrated similar waterproofing capabilities.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.
A waterproof member includes a polymer sheet and a UV resin layer adhered to the polymer sheet. A method of producing a waterproof member includes injecting a first UV resin solution into a first resin molding, placing a polymer sheet onto the first UV resin solution, compressing the polymer sheet and the first UV resin solution to be closely adhered to each other, curing a first UV resin layer on the polymer sheet by irradiating UV into the first UV resin solution, injecting a second UV resin solution into a second resin molding, placing a polymer sheet having the first UV resin molding onto the second resin molding, compressing the polymer sheet and the second UV resin solution to be closely adhered to each other, and curing a second UV resin layer on the polymer sheet by irradiating UV into the second UV resin solution.

## Claims

1. A waterproof member, comprising:
a polymer sheet; and
an ultraviolet (UV) resin layer adhered to a first surface and a second surface of the polymer sheet.

2. The waterproof member of claim 1, wherein the UV resin layer comprises a top resin layer adhered on the first surface of the polymer sheet, and a lower resin layer adhered to the second surface of the polymer sheet.

3. The waterproof member of claim 1 or 2, wherein the polymer sheet is made of PC (Polycarbonate) or PET (Polyethylene Terephthalate).

4. The waterproof member of any of claims 1 to 3, wherein the polymer sheet has a thickness of 150 µm to 300 µm.

5. The waterproof member of any of claims 1 to 4, wherein the UV resin layer has a thickness of 300 µm to 500 µm and/or a Shore hardness of 40° to 60°.

6. The waterproof member of any of claims 1 to 5, wherein the UV resin layer further comprises at least one of:
• a UV resin and a curing agent,
• an anti-foaming agent, and
• an extinction agent.

7. The waterproof member of any of claims 1 to 6, wherein the waterproof member is shaped as connected rings.

8. A method for producing a waterproof member, comprising:
injecting a first ultraviolet (UV) resin solution into a first resin molding;
placing a polymer sheet onto the first UV resin solution;
compressing the polymer sheet and the first UV resin solution to be adhered to each other; and
curing a first UV resin layer on the polymer sheet by irradiating UV into the first UV resin solution.

9. The method of claim 8, further comprising:
injecting a second UV resin solution into a second resin molding;
placing a polymer sheet having the first UV resin molding onto the second resin molding;
compressing the polymer sheet and the second UV resin solution to be adhered to each other; and
curing a second UV resin layer on the polymer sheet by irradiating UV into the second UV resin solution.

10. The method of claim 9, further comprising cutting and machining the polymer sheet having the first UV resin layer and the second UV resin layer.

11. The method of claim 9 or 10, wherein injecting the second UV resin solution is performed simultaneously with injecting the first UV resin solution.

12. The method of any of claims 9 to 11, wherein curing the first UV resin layer and curing the second UV resin layer is performed by irradiating a UV lamp by a value of 700 J to 1000 J and/or for a duration between 5 to 10 seconds.

13. A member to prevent liquid from entering into an area, the member comprising:
a first material formed by ultraviolet (UV) irradiation;
a second material; and
a third material formed by UV irradiation;
wherein the first material and the third material sandwich the second material.

14. The member of claim 13, wherein the first material and the third material have different restoring and compressive forces from each other and/or different thicknesses from each other.

15. A terminal, comprising:
a waterproof member to block liquid from entry into the terminal, wherein the waterproof member comprises:
a polymer sheet; and
an ultraviolet (UV) resin layer adhered to a first surface and a second surface of the polymer sheet.
